# EUROPEAN PATENT SPECIFICATION

(11) **EP 4 123 139 B1**
(45) Date of publication and mention of the grant of the patent: **18.09.2024**
(21) Application number: 20925010.9
(22) Date of filing: 16.03.2020
(51) Int. Cl.: F02B 31/04, F02B 31/06, F02M 35/10, F02M 35/16, F02B 31/08

(54) **INTERNAL COMBUSTION ENGINE WITH INTAKE STRUCTURE**
VERBRENNUNGSMOTOR MIT EINLASSSTRUKTUR
MOTEUR À COMBUSTION INTERNE AVEC STRUCTURE D'ADMISSION

(43) Date of publication of application: 25.01.2023
(73) Proprietor: HONDA MOTOR CO., LTD., Minato-ku Tokyo 107-8556 (JP)
(72) Inventor: INUI, Hiroatsu, Tokyo 107-8556 (JP)
(74) Representative: Weickmann & Weickmann PartmbB
(86) International application number: PCT/JP2020/011549
(87) International publication number: WO 2021/186513

(56) References cited:
- EP-A1- 3 428 433
- WO-A1-2019/009347
- WO-A1-2019/009348
- WO-A1-99/67514
- JP-A- 2016 061 279
- JP-A- 2019 157 804
- JP-A- H10 231 729

## Description

### [Technical Field]

The present invention relates to an internal combustion engine with an intake structure, particularly an internal combustion engine mounted on a straddle type vehicle.

### [Background Art]

Patent Document 1 below describes that an intake passage provided between a throttle valve and an intake valve is defined as a main passage and a tumble passage along the passage direction, for example. In Patent Document 1 described below, the tumble passage has a circular cross section, and there is room for improvement in order for intake air to efficiently pass through a port opening, which is a flat passage, between the intake valve and an intake valve valve seat.

Further, for example, Patent Document 2 below describes a configuration in which a tumble passage is flattened, but since the tumble passage directly faces the intake valve port, there is a problem that a valve shaft of the intake valve interferes with an intake air flow from the tumble passage.

Last, Patent Document 3 below discloses another configuration wherein a flattened tumble passage splits into two symmetrical branches upstream of the intake valve port.

### [Prior Art Document]

### [Patent Document]

Patent Document 1: JP 6268604 B2 (Figs. 3 to 7)
Patent Document 2: WO-A-2019/009347 (Figs. 3 to 5)
Patent Document 3: JP 2019 157804 A (Figs. 3 to 7)

### [Summary of the Invention]

### [Underlying Problems to be solved by the Invention]

In view of the above prior art, an object of the present invention is to provide an intake structure of an internal combustion engine, in which an intake passage provided between a throttle valve and an intake valve is formed in a main passage and a tumble passage, and an intake air flow during low-load operation easily flows between the intake valve and an intake valve valve seat along the tumble passage, and flows into a combustion chamber to strengthen the tumble flow, thereby improving fuel consumption performance.

### [Means to Solve the Problems]

In order to solve the above problems, the present invention provides
an intake structure of an internal combustion engine in which a main passage and a tumble passage are formed by a partition wall that partitions an intake passage provided between a throttle valve and an intake valve vertically along the passage direction, and intake air is guided into the tumble passage when an internal combustion engine is in a low-load operation, and
a transverse cross section of the tumble passage formed by the partition wall is formed in a horizontally long oval shape whose longitudinal direction is a passage width direction, and one end in a longitudinal direction of the transverse cross section of the tumble passage is oriented along a tangential direction of an opening edge of an intake valve port, and another end is oriented to gradually narrow a longitudinal width of the transverse cross section toward the intake valve port.

According to the above configuration,
the intake air flow during the low-load operation of the internal combustion engine is rectified along the tumble passage having the transverse cross section formed in a horizontally long oval shape with the passage width direction as the longitudinal direction, and easily flows between the intake valve and the intake valve valve seat, and collision interference with the intake valve seat is reduced to flow into a combustion chamber, and the tumble flow is strengthened. Therefore, atomization of an air-fuel mixture by the tumble flow during the low-load operation is promoted, rapid combustion and lean combustion are possible, and the fuel consumption performance can be improved.

Further, the intake air flow flowing through the tumble passage can linearly flow into the combustion chamber through the intake valve port, and the longitudinal width w of the transverse cross section of the tumble passage gradually decreases, so that the passage cross-sectional area gradually decreases and the flow velocity gradually increases. Therefore, the tumble flow T is strengthened in the combustion chamber, atomization of the air-fuel mixture is further promoted, leaner combustion is possible, and fuel consumption performance can be improved.

Further, the internal combustion engine includes a pair of an exhaust valve and the intake valve in which shaft portions of the exhaust valve and the intake valve are oriented to be opened in a V shape in a front-rear direction above a combustion chamber, a virtual extension line of the other end of the tumble passage passes through a vicinity of the shaft portion of the intake valve, and an ignition plug is disposed on a peripheral portion of the combustion chamber on a side of the other end.

Therefore, since the intake air flow flowing on the other end side of the tumble passage flows so as to be in contact with the valve shaft of the intake valve, the flow velocity is reduced on the other end side of the intake air flow linearly flowing through the port opening between the upper surface of the umbrella portion of the intake valve and the intake valve valve seat of the intake valve port, and a swirl flow toward the other end side is generated. By the effect of guiding the air-fuel mixture to the ignition plug provided on the other end side of the intake air flow, ignitability in the ignition plug is enhanced, combustion stability is obtained, lean combustion is improved, and fuel performance can be improved.

According to a preferred embodiment of the present invention,
the main passage is provided with a reed valve that closes the intake air flow when the internal combustion engine is in the low-load operation.

Therefore, the intake air flowing through the main passage can be restricted by the reed valve during the low-load operation of the internal combustion engine, and the intake air flow can mainly flow to the tumble passage, so that the tumble flow can be further enhanced.

According to a preferred embodiment of the present invention,
the reed valve is provided between the throttle valve and an inlet manifold, and the reed valve element that restricts the intake air flow of the main passage has one end portion on an upstream side attached to the reed valve body of the reed valve so as to cover a main-passage-side outlet opening of the reed valve, and an opening-side edge portion on a downstream side formed in a direction parallel to the passage width direction of the tumble passage.

Therefore, since the passage-width-direction operation region of the reed valve element can be formed to be large along the passage-width direction of the tumble passage having the transverse cross section, the main-passage-side outlet opening of the reed valve can be provided to be large, and the flow passage resistance of both the main passage and the tumble passage can be reduced to improve the intake efficiency.

According to a preferred embodiment of the present invention,
the reed valve body of the reed valve is formed by a mold combined from two directions against each other in which the main passage is molded by a molding die from a downstream side and the tumble passage is molded by a molding die from an upstream side.

Therefore, due to the draft angle of the molding die for forming the reed valve body, the passage area of the main passage is enlarged from the inlet toward the outlet, while the tumble passage is conversely reduced, so that the change in the total passage area of the passages is reduced, the disturbance of the flow velocity of the intake air flow during a high-load operation can be prevented, and the engine performance is improved.

According to a preferred not claimed embodiment
a main-passage-side outlet opening width of the main-passage-side outlet opening of the reed valve body is wider than an inlet opening width of an inlet opening (82) of the reed valve body.

Therefore, the intake air flow at a high load can smoothly flow toward the main passage, and the engine performance can be improved.

According to a preferred not claimed embodiment
in the valve intake path in the reed valve body, a tumble-passage-side outlet opening is made narrow and provided below and vertically adjacent to the main-passage-side outlet opening, tumble-passage-side outlet opening being narrowed by step portions provided on both sides of a lower portion of the main-passage-side outlet opening.

Therefore, the tumble-passage-side outlet opening is narrowed by the step portions, the flow velocity of the tumble passage is increased at the time of low load, the lean combustion is improved, and the fuel consumption is improved.

### [Effects of the Invention]

According to the intake structure of the internal combustion engine according to the present invention,
the intake air flow during the low-load operation of the internal combustion engine is rectified along the tumble passage having the transverse cross section formed in a horizontally long oval shape with the passage width direction as the longitudinal direction, and easily flows between the intake valve and the intake valve valve seat, and collision interference with the intake valve seat is reduced to flow into a combustion chamber, and the tumble flow is strengthened. Therefore, atomization of an air-fuel mixture by the tumble flow during the low-load operation is promoted, rapid combustion and lean combustion are possible, and the fuel consumption performance can be improved.

Further, the intake air flow flowing through the tumble passage can linearly flow into the combustion chamber through the intake valve port, and the longitudinal width w of the transverse cross section of the tumble passage gradually decreases, so that the passage cross-sectional area gradually decreases and the flow velocity gradually increases. Therefore, the tumble flow T is strengthened in the combustion chamber, atomization of the air-fuel mixture is further promoted, leaner combustion is possible, and fuel consumption performance can be improved.

### [Brief Description of Drawings]

Fig. 1 is a schematic left side view of a motorcycle 1 including an intake structure of an internal combustion engine according to an embodiment of the present invention.
Fig. 2 is a right cross-sectional side view of a cylinder block, a cylinder head, a head cover, and a periphery of the cylinder block, the cylinder head, and the head cover of a power unit in Fig. 1, taken along a cylinder axis C.
Fig. 3 is a perspective view of an upstream side of a not claimed reed valve body of a reed valve.
Fig. 4 is a perspective view of a downstream side of the reed valve body of the reed valve.
Fig. 5 is a perspective view of a downstream side of the reed valve body having the same orientation as that of Fig. 4, and illustrates a state in which a reed valve element is fastened to the reed valve body.
Fig. 6 is a top view of the cylinder head as viewed in a direction of the arrows VI-VI in Fig. 2, in which an intake port inlet is illustrated behind an intake-side flange surface.
Fig. 7 is a perspective view of a cross section, as viewed from the head cover side, which slightly obliquely intersects with the cylinder axis C rather than being orthogonal to the cylinder axis C, generally along a tumble passage of the cylinder head as viewed from the arrows VII-VII in Fig. 2.
Fig. 8 is a top perspective view of the cylinder head as viewed from the upper right rear side as viewed from the arrow VIII in Fig. 2.

### [Mode for carrying out the Invention]

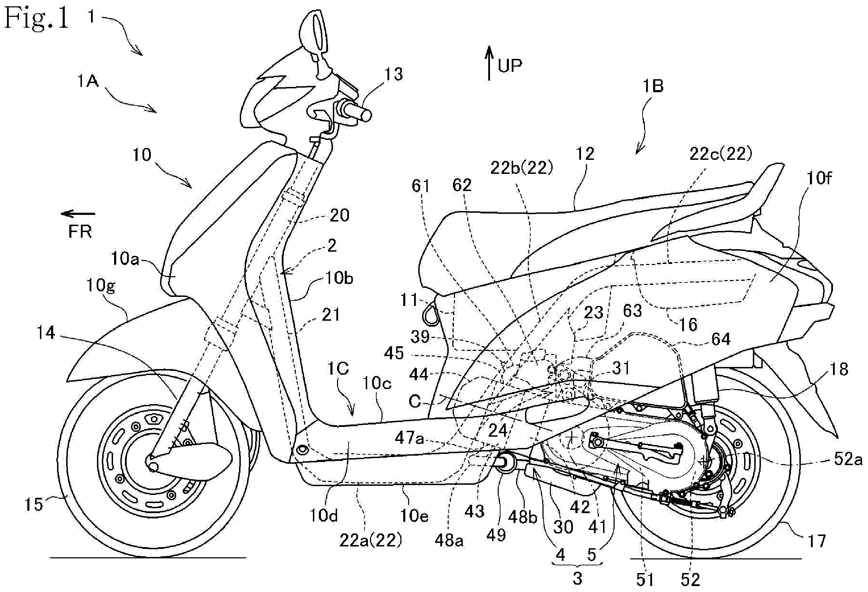

An intake structure of an internal combustion engine according to an embodiment of the present invention will be described with reference to Figs. 1 to 8.

Note that directions such as front, rear, left, right, up, and down in the description and claims of the present specification follow a vehicle orientation of a straddle type vehicle in a case where the internal combustion engine according to the present embodiment is mounted on a straddle type vehicle. In this embodiment, a straddle type vehicle specifically is a scooter-type motorcycle (hereinafter simply referred to as a "motorcycle").

In the drawing, the arrows FR, LH, RH, and UP indicate the front, the left, the right, and an upper part of the vehicle, respectively.

Fig. 1 illustrates an outline of a left side surface of a motorcycle 1 including an intake structure of an internal combustion engine according to the present embodiment.

In the motorcycle 1 of this embodiment, a vehicle body front portion 1A and a vehicle body rear portion 1B are connected to each other via a low floor portion 1C (foot placing portion), and a vehicle body frame 2 forming a framework of the vehicle body is basically formed of a down frame 21 and a main frame 22.

That is, the down frame 21 extends downward from a head pipe 20 of the vehicle body front portion 1A and is connected to a pair of left and right lower frame portions 22a of the main frame 22 extending substantially horizontally rearward from the lower end of the down frame 21. The main frame 22 extending to an obliquely rear and upper side from the rear ends of the lower frame portions 22a forms a pair of right and left inclined portions 22b, and the upper portions of the inclined portions 22b further bend to form a pair of right and left horizontal portions 22c extending substantially horizontally to the rear side.

The inclined portions 22b and the horizontal portions 22c of the main frame 22 support a storage box (also referred to as a helmet box) 11, and an occupant seat 12 is arranged to cover the upper side of the storage box.

In contrast, in the vehicle body front portion 1A, a handle bar 13 is provided on an upper side of the head pipe 20 so as to be pivotably supported thereby, a front fork 14 extends downward, and a front wheel 15 is pivotably supported at a lower end thereof.

A power unit support bracket 23 is provided to project rearward in the inclined portions 22b of the main frame 22, and a swing type power unit (hereinafter simply referred to as a "power unit") 3 is connected and supported to the power unit support bracket 23 via a link member 24 so as to be vertically swingable.

That is, the motorcycle 1 of this embodiment adopts an upper link-type supporting structure of a power unit 3, and as a result, a space provided with a catalyst device 92 below the front portion of the power unit 3 is obtained.

In the vehicle body front portion 1A, the head pipe 20 and the down frame 21 are covered from the front and rear sides with a front cover 10a and a leg shield 10b of a vehicle body cover 10.

A floor portion 1C is provided on the pair of left and right lower frame portions 22a of the main frame 22 of the vehicle body frame 2. An upper portion of the lower frame portion 22a is covered with a floor cover 10c, left and right portions thereof are covered with a floor side cover 10d in the front-rear direction, and a lower portion thereof is covered with an under cover 10e.

In the vehicle body rear portion 1B, a fuel tank 16 is provided on the horizontal portion 22c of the main frame 22 below the rear portion of the occupant seat 12 and above a rear wheel 17, and the inclined portion 22b and the horizontal portion 22c of the main frame 22 are covered on the left, right, and rear sides by a body cover 10f. Further, a front fender 10g is provided above the front wheel 15.

Each of the covers 10a to 10g configuring the vehicle body cover 10 is formed of a suitable material such as a resin material.

In the power unit 3, an internal combustion engine 4 is provided, and a power transmission part 5 internally provided with a belt type stepless transmission 51 is provided behind the internal combustion engine 4. A reduction gear mechanism 52 which is transmitted from the belt type stepless transmission 51 is provided at a rear portion of the power transmission part 5, and the rear wheel 17 is provided on a rear axle 52a which is an output shaft of the reduction gear mechanism.

A rear cushion 18 is interposed between the rear portion of the power transmission part 5 and the rear horizontal portion 22c of the main frame 22.

The internal combustion engine 4 is a single-cylinder air-cooled 4-stroke cycle internal combustion engine, in which a crankshaft 41 is rotatably supported by a crankcase 30 so as to be directed in the vehicle width direction, that is, the left-right direction, and a cylinder block 42, a cylinder head 43, and a head cover 44 are sequentially overlapped so as to protrude from the front portion of the crankcase 30, and fastened with the cylinder axis C being substantially horizontal and greatly inclined forward.

An inlet manifold 61 and a throttle body 62 are provided above the power unit 3, the cylinder head 43, and the crankcase 30. The inlet manifold 61 is connected to an intake port inlet 45a in an upper portion of the cylinder head 43, which is greatly forward inclined. The inlet manifold 61 extends with its upstream side bent backward and connected to the throttle body 62.

The upstream side of the throttle body 62 is connected via a connecting tube 63 to an air cleaner 64 attached to the upper portion of the power transmission part 5.

An intake passage 6 is formed from the connecting tube 63 through the throttle body 62, the inlet manifold 61, and an intake port 45 of the cylinder head 43, and leads to a combustion chamber 32.

In an upstream exhaust pipe 48a connected to an exhaust port outlet 47a at the lower portion of the cylinder head 43, the catalyst device 49 having a substantially cylindrical shape directed in the vehicle width direction is interposed, and a catalyst such as a three-way catalyst for purifying exhaust gas is loaded in the inside thereof.

A downstream exhaust pipe 49b connected to the outlet of the catalyst device 49 is bent rearward, extends rearward along the right side of the vehicle, and is connected to a muffler (not illustrated) on the right side of the rear wheel 17.

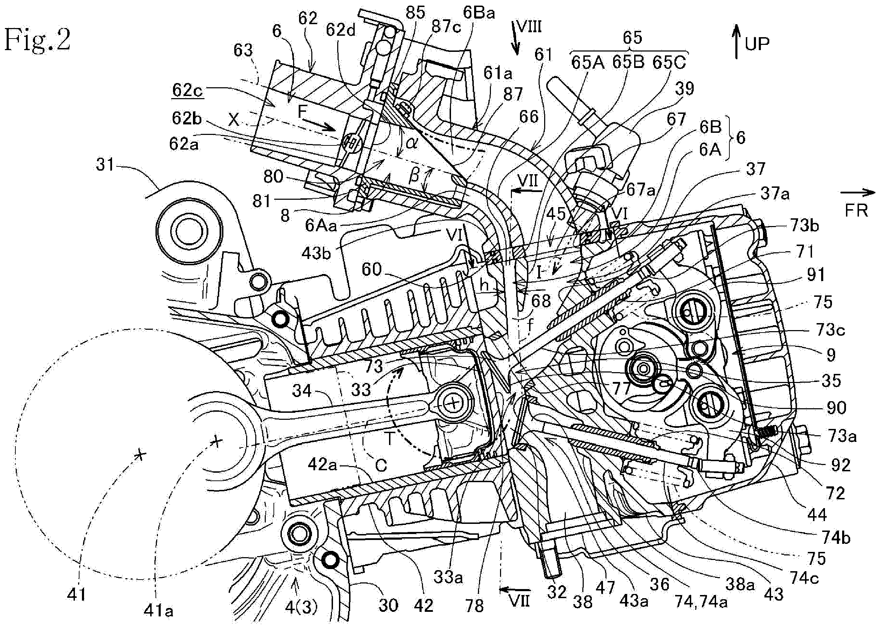

Fig. 2 is a right cross-sectional side view of the cylinder block 42, the cylinder head 43, the head cover 44, and the periphery thereof of the power unit 3 in Fig. 1, taken along the cylinder axis C.

The crankcase 30 is configured by combining a left case half body 30L and a right case half body (not illustrated) which are divided into right and left, and the left case half body 30L extends rearward to form a power transmission part 5 that accommodates a transmission device including a long belt type stepless transmission 51 (not illustrated), a reduction gear mechanism 52, and the like between the crankshaft 41 and the rear axle 52a of the rear wheel 17.

A piston 33 reciprocating in a cylinder bore 42a of the cylinder block 42 is connected to a crank pin 41a of the crankshaft 41 of the crankcase 30 by a connecting rod 34.

The combustion chamber 32 is formed between a top surface 33a of the piston 33 slidably fitted in the cylinder bore 42a of the cylinder block 42 and a combustion chamber ceiling surface 43a of the cylinder head 43 to which the top surface 33a is facing.

As illustrated in Fig. 2, in the present embodiment, the throttle body 62 is fastened and connected to the inlet manifold 61 connected to the intake port inlet 45 of the cylinder head 43 on the upstream side via a reed valve 8 described later.

In the throttle body 62, a throttle valve 62a is incorporated in the intake passage 6, and rotates around a throttle valve shaft 62b to open and close the intake passage 6 and adjust an intake flow rate.

In Fig. 2, 31 represents a bracket portion that protrudes upward from the upper portion of the crankcase 30 and suspends the power unit 3 to the vehicle body frame 2. As illustrated in Fig. 1, the bracket portion 31 is pivotally supported by a power unit support bracket 23 protruding rearward from the inclined portion 22b of the main frame 22 via a link member 24, and the power unit 3 swings up and down with respect to the vehicle body frame 2.

The rear end of the power unit 3 that vertically swings is supported by the horizontal portion 22c of the main frame 22 by the rear cushion 18.

As illustrated in Fig. 2, an inlet manifold 61 is connected to the front side of the throttle body 62, that is, the downstream side of the intake air and is bent downward, and is connected to the intake port inlet 45a in the upper portion of the cylinder head 43 with an insulator 60 interposed therebetween.

A fuel injection valve 39 is attached to a downstream end of the inlet manifold 61, and fuel is injected toward the intake valve port 35.

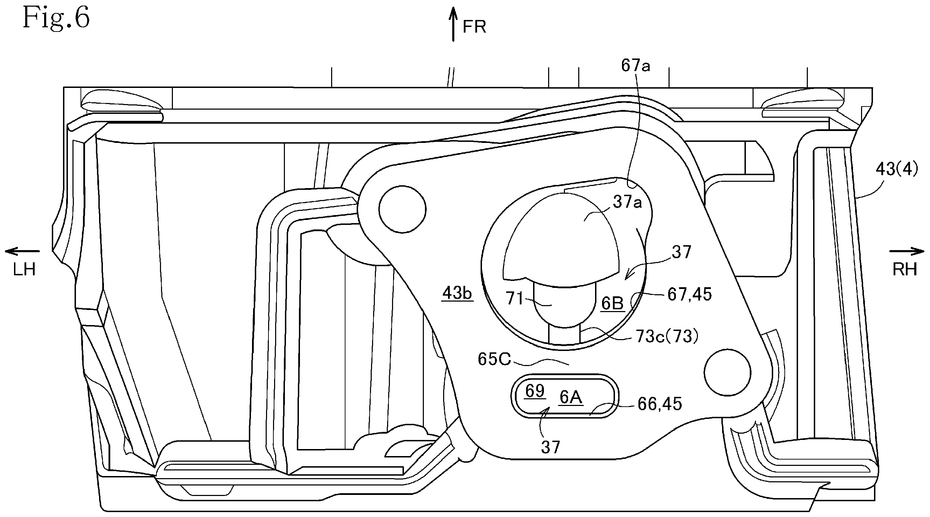

Since the fuel injection has a certain spread with respect to the injection center line I illustrated in Fig. 2, a fuel injection avoiding recess 67a that avoids the injected fuel is provided in a later described main passage head inlet opening 67 on the downstream side (see Fig. 6).

A fuel hose (not illustrated) connected to the fuel injection valve 39 is routed rearward and connected to a fuel tank 16 provided above the rear wheel 17 via a fuel pump device (not illustrated).

In the present embodiment, the internal combustion engine 4 employs a single-cylinder SOHC type two-valve system, and a valve mechanism 9 is provided in the cylinder head 43. The cylinder head 43 is covered with the head cover 44 so as to cover the valve mechanism 9.

In order to transmit power to the valve mechanism 9 in the head cover 44, an endless cam chain (not illustrated) passes through a cam chain chamber (not illustrated) provided on one side of the crankcase 30, the cylinder block 42, and the cylinder head 43 in the direction of the crankshaft 41, and is installed between the camshaft 91 and the crankshaft 41, and the camshaft 91 rotates at a rotation speed of 1/2 in synchronization with the crankshaft 41.

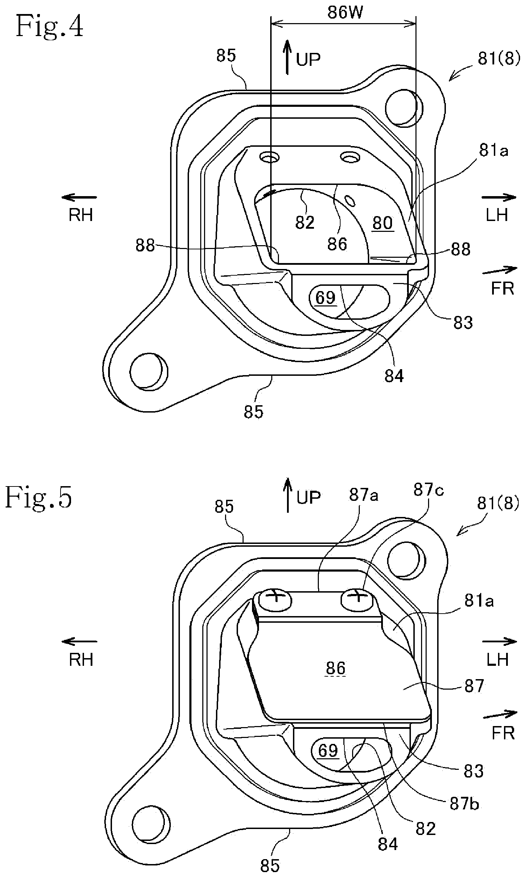

Here, an ignition plug 40 (see Fig. 4) is fitted into the cylinder head 43 from the side opposite to the cam chain chamber (the other side in the direction of the crankshaft 41) toward the inside of the combustion chamber 32.

In the cylinder head 43 in which the cylinder axis C is substantially horizontal and greatly inclined forward, the intake port 37 and an exhaust port 38 are formed to extend while being curved in directions vertically away from each other from the intake valve port 35 and an exhaust valve port 36 opened to the combustion chamber ceiling surface 43a, respectively.

An upstream end of the intake port 37 opens upward from the cylinder head 43 to form an intake port inlet 45, and is connected to the inlet manifold 61 to form a continuous intake passage 6. The throttle body 62 is connected to the upstream side of the inlet manifold 61.

A downstream end of the exhaust port 38 forms an exhaust port outlet 47, opens downward of the cylinder head 43, and is connected the upstream exhaust pipe 48a (see Fig. 1).

A cylindrical intake valve guide 71 is integrally fitted to the curved outer wall portion 37a of the intake port 37 in the cylinder head 43, and an intake valve 73 slidably supported by the intake valve guide 71 opens and closes the intake valve port 35 facing the combustion chamber 32 of the intake port 37.

In addition, an exhaust valve 74 slidably supported by the exhaust valve guide 72 integrally fitted to the curved outer wall portion 38a of the exhaust port 38 in the cylinder head 43 opens and closes the exhaust valve port 36 facing the combustion chamber 32 of the exhaust port 38.

The intake valve 73 and the exhaust valve 74 are biased upward by a valve spring 75 such that the umbrella portions 73a and 74a close the intake valve port 35 and the exhaust valve port 36 facing the combustion chamber 32, respectively. However, stem ends 73b and 74b of the intake valve 73 and the exhaust valve 74 are pushed down by an intake rocker arm 91 and an exhaust rocker arm 92 that swing in contact with an intake cam and an exhaust cam of the camshaft 90, the intake valve 73 and the exhaust valve 74 are opened at a predetermined timing, the intake port 37 and the combustion chamber 32, and the exhaust port 38 and the combustion chamber 32 communicate with each other, and intake and exhaust are performed at a predetermined timing.

In the internal combustion engine 4 of the present embodiment as described above, in order to obtain more preferable combustion in the combustion chamber 32, an intake structure for giving a longitudinal rotating vortex (rotating vortex on a virtual plane along the cylinder axis C) of the fuel-air mixture in the combustion chamber 32, that is, a tumble flow T, and a lateral rotating vortex (rotating vortex on a virtual plane orthogonal to the cylinder axis C), that is, a swirl flow S is configured.

The inlet manifold 61 is connected to an upstream end of the intake port 37 of the internal combustion engine 4 via an insulator 60 to form the continuous intake passage 6, and the throttle body 62 is connected to an upstream side of the inlet manifold 61 via the reed valve 8 to be described later.

The throttle body 62 has an intake path 62c having a substantially circular cross section and constituting a part of the intake passage 6 connected to a combustion chamber 32 of the internal combustion engine 4, and an upstream side thereof is connected to the air cleaner 64 (see Fig. 1) via the connecting tube 63.

The throttle body 62 includes the single butterfly throttle valve 62a that is rotatably and pivotally supported in the throttle body 62 by the throttle valve shaft 62b that is oriented vertically to the intake flow direction F of the intake path 62c, that is, vertically to the center axis X of the intake path 62c, to substantially horizontally to variably control the flow path area of the intake path 62c and open and close the intake path 62c.

The throttle valve 62a is rotatable in a valve opening direction in a clockwise direction in Fig. 2 by a driver's operation or the like, and is biased in a valve closing direction in a counterclockwise direction by a return spring (not illustrated).

According to the present embodiment, the intake path 62c of the throttle body 62 is oriented substantially horizontally.

According to the present embodiment, the intake passage 6 is divided into upper and lower parts along the intake flow direction by a partition wall 65 following from the inlet manifold 61 to the intake port 37, and is partitioned into a tumble passage 6A on the lower side in the drawing and a main passage 6B on the upper side in the drawing except for the tumble passage 6A, the tumble passage 6A being configured to generate a tumble flow T in the combustion chamber 32.

According to the present invention, the "tumble passage" is a passage for intake air for generating the tumble flow T in the combustion chamber 32 when the throttle valve 62a has a low opening, that is, when the internal combustion engine 4 has a low load.

Note that, in the present invention, the vertical arrangement of the tumble passage 6A and the main passage 6B is not limited to that of the embodiment.

The partition wall 65 is configured such that an inlet-manifold-side partition wall 65A, an insulator-side partition wall 65B, and an intake-port-side partition wall 65C are continuously positioned from the upstream side to the downstream side of the intake air flow.

The main passage 6B on the upper side in the drawing and the tumble passage 6A on the lower side in the drawing are defined by vertically partitioning the intake passage 6 on the downstream side of the throttle body 62 from the inlet manifold 61 to the intake port 37 by the partition wall 65. As illustrated in Fig. 2, the reed valve 8 formed in a substantially triangular shape in a cross section of the intake passage 6 in a side view is interposed between the throttle body 62 and the inlet manifold 61.

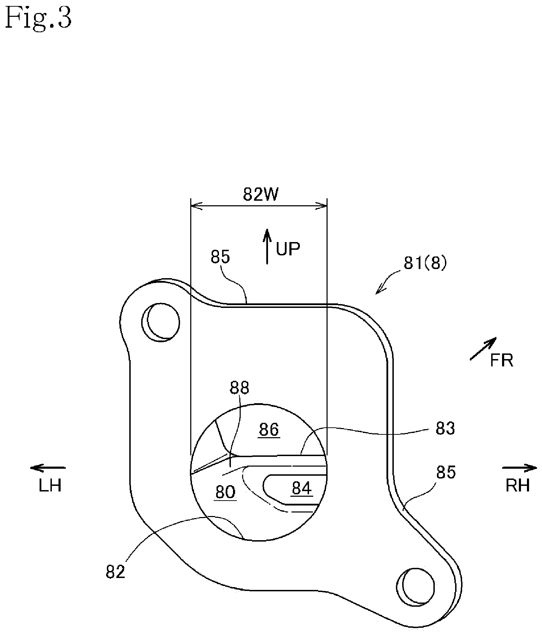

Fig. 3 is a perspective view of an upstream side of a reed valve body 81 of the reed valve 8, in which the intake passage 6 is illustrated to be opened in the mounting flange portion 85, and the main-passage-side outlet opening 86 and the tumble-passage-side outlet opening 84 are seen at a depth of the valve intake path 80 inside.

Fig. 4 is a perspective view of the downstream side of the reed valve body 81 of the reed valve 8, and illustrates the back portion of the mounting flange portion 85, the main-passage-side outlet opening 86 of the inclined surface 81a, the tumble-passage-side outlet opening 84 of the downstream end 83, and the like.

Fig. 5 is a perspective view of the downstream side of the reed valve 8 having the same orientation as that of Fig. 4, and illustrates a state in which the reed valve element 87 is fastened to the reed valve body 81.

The reed valve 8 includes the reed valve body 81 that forms the whole shape, and the mounting flange portion 85 thereof is sandwiched and fastened between a downstream end portion of the throttle body 62 and an upstream end portion of the inlet manifold 61.

An inlet opening 82 coinciding with a downstream opening 62d of the throttle body 62 is provided on a surface of the reed valve body 81 to be attached to the throttle body 62, and the valve intake path 80 communicating with the intake path 62c of the throttle body 62 is formed in the reed valve body 81.

The downstream end 83 of the reed valve body 81 is provided with the tumble-passage-side outlet opening 84 that abuts against an upstream end 65Aa of the inlet-manifold-side partition wall 65A and matches an upstream end opening 6Aa of the tumble passage 6A of the inlet manifold 61.

The upper portion of the reed valve body 81 is formed to be inclined from the back portion of the mounting flange portion 85 to the lower portion on the downstream side of the reed valve 8, and the inclined surface 81a is formed with the main-passage-side outlet opening 86 that communicates the valve intake path 80 in the reed valve body 81 and the main passage 6B of the inlet manifold 61.

The reed valve element 87 is fastened to the outer surface of the main-passage-side outlet opening 86 by a reed valve element screw 87c at one end portion 87a on the upstream side to the back portion of the mounting flange portion 85 so as to cover the main-passage-side outlet opening 86.

An opening-side edge portion 87b on the other end side of the reed valve element 87 is a swing free end, and contacts the reed valve body 81 in the upper portion of the tumble-passage-side outlet opening 84 of the downstream end 83 of the reed valve body 81. When the negative pressure on the downstream side of the reed valve element 87 is smaller than a certain value, a state in which the main-passage-side outlet opening 86 is closed is maintained, and the intake air flows exclusively from the valve intake path 80 in the reed valve body 81 to the tumble passage 6A of the inlet manifold 61.

When the throttle valve 62a has a high opening degree, that is, when the internal combustion engine 4 has a high load and the negative pressure on the downstream side of the reed valve element 87 becomes larger than a certain value, the opening-side edge portion 87b on the downstream side of the reed valve element 87 bends so as to open the main-passage-side outlet opening 86, and the intake air flows from the valve intake path 80 in the reed valve body 81 to the main passage 6B of the inlet manifold 61.

Therefore, the upstream end opening 6Aa of the tumble passage 6A of the intake passage 6 of the inlet manifold 61 connected to the downstream side of the valve intake path 80 of the reed valve 8 is connected to the downstream side of the tumble-passage-side outlet opening 84 of the downstream end 83 of the reed valve 8 to open, and the upstream end opening 6Ba of the main passage 6B is connected to the downstream side of the main-passage-side outlet opening 86 of the inclined surface 81a of the reed valve 8 to open.

In the present embodiment, as illustrated in Fig. 2, the throttle valve 62a is provided near the downstream end of the intake path 70 of the throttle body 62, and the tumble-passage-side outlet opening 84 and the main-passage-side outlet opening 86 of the reed valve 8 are connected via the valve intake path 80 having a suppressed volume. Therefore, the response of the reed valve element 87 of the main-passage-side outlet opening 86 to the state of the throttle valve 62a is fast, and the response of the intake air flow switching between the tumble passage 6A and the main passage 6B is high.

Further, the reed valve 8 is provided between the throttle body 62 and the inlet manifold 61, and as illustrated in Figs. 4 and 5, in the tumble-passage-side outlet opening 84, a transverse cross section 69 is wide and the opening cross section is large on the lower side of the intake passage 6.

In the reed valve element 87 that restricts the intake air flow of the main passage 6B, the one end portion 87a on the upstream side is attached to the reed valve body 81 so as to cover the main-passage-side outlet opening 86 of the reed valve 8, and the opening-side edge portion 87b on the downstream side is formed in a direction parallel to the passage width direction of the tumble passage 6A.

Therefore, since the passage-width-direction operation region of the reed valve element 87 can be formed to be large along the passage-width direction of the tumble passage 6A having the transverse cross section 69, the main-passage-side outlet opening 86 of the reed valve 8 can be provided to be large, and the flow passage resistance of both the main passage 6B and the tumble passage 6A is reduced to improve the intake efficiency.

Further, the reed valve body 81 of the reed valve 8 is integrally molded by a mold combined from two directions against each other, the main passage 6B of the reed valve body 81 is molded by a molding die from the downstream side, and the tumble passage 6A of the reed valve body 81 is molded by a molding die from the upstream side.

Therefore, as illustrated in Fig. 2, the main passage 9B in the reed valve 8 is formed at an angle β widening toward the downstream side due to the draft angle of the molding die.

The tumble passage 6A in the reed valve 8 is formed at an angle α that narrows toward the downstream side due to the draft angle of the molding die.

That is, due to the draft angle of the molding die for forming the reed valve body 81, the passage area of the main passage 6B is enlarged from the inlet toward the outlet, while the tumble passage 6A is conversely reduced, so that the change in the total passage area of the passages 6A and 6B is reduced, the disturbance of the flow velocity of the intake air flow during the high load operation can be prevented, and the engine performance is improved.

To the inlet manifold 61, the fuel injection valve 39 is attached, which penetrates the main passage 6B from the upper outside and injects and supplies fuel toward the intake valve port 35.

According to the present embodiment, the fuel injection valve 39 is disposed in the inlet manifold 61, but a direct injection structure in which the fuel injection valve 39 is disposed in the cylinder head 43 or the cylinder block 42 and fuel is injected into the combustion chamber 32 may be used.

As illustrated in Figs. 4 and 5, the tumble-passage-side outlet opening 84 of the downstream end 83 of the reed valve 8 is formed in a horizontally long cross section having a horizontally long oval shape elongated in the passage width direction.

Therefore, the tumble passage 6A of the inlet manifold 61 connected to the tumble-passage-side outlet opening 84 is also formed such that the intake passage 6 is partitioned by the inlet-manifold-side partition wall 65A, and the transverse cross section 69 is formed in a horizontally long oval cross section long in the passage width direction.

The main-passage-side outlet opening width 86W of the main-passage-side outlet opening 86 of the reed valve body 81 illustrated in Fig. 4 is formed to be wider than the inlet opening width 82W of the inlet opening 82 of the reed valve body 81 illustrated in Fig. 3.

Therefore, the intake air flow at a high load of the internal combustion engine 4 can smoothly flow toward the main passage 6B, and the engine performance can be improved.

Further, as illustrated in Figs. 3 and 4, in the valve intake path 80 in the reed valve body 81, the tumble-passage-side outlet opening 84 is provided to be narrower than the main-passage-side outlet opening 86 by step portions 88 provided on both sides of the lower portion of the main-passage-side outlet opening 86, the tumble-passage-side outlet opening 84 being vertically adjacent to the main-passage-side outlet opening 86 below.

Therefore, the tumble-passage-side outlet opening 84 is narrowed by the step portions 88, the flow velocity of the tumble passage 6A is increased at the time of low load of the internal combustion engine 4, the lean combustion is improved, and the fuel consumption is improved.

As described above, since the reed valve element 87 of the reed valve 8 that closes the intake flow during the low-load operation of the internal combustion engine 4 is provided in the main passage 6B of the intake passage 6, the intake air flowing through the main passage 6B can be restricted by the reed valve element 87 of the reed valve 8 during the low-load operation of the internal combustion engine 4, and the intake flow can mainly flow to the tumble passage 6A, so that the tumble flow T in the combustion chamber 32 can be further increased.

The tumble flow T indicated by the two-dot chain line in Fig. 2 schematically indicates the tumble flow T in the combustion chamber 32 when the piston 33 descends in the cylinder bore 42a as indicated by a two-dot chain line.

Fig. 6 is a top view of the cylinder head 43 as viewed in a direction of the arrows VI-VI in Fig. 2, and the intake port inlet 45 is illustrated behind the intake side flange surface 43b to which the inlet manifold 61 is fastened via the insulator 60.

The intake port inlet 45 is partitioned by the intake-port-side partition wall 65C, and the tumble passage head inlet opening 66 and the main passage head inlet opening 67 are opened, whereas the tumble passage head inlet opening 66 is also formed in a laterally long oval cross section 69 that is long in the passage width direction similarly to the tumble passage 6A of the inlet manifold 61.

In the main passage head inlet opening 67, as described above, the fuel injection avoiding recess 67a that avoids the fuel injected from the fuel injection valve 39 is formed (see Fig. 2).

According to the present embodiment, the tumble passage 6A of the cylinder head 43 is formed by casting at the time of casting the cylinder head 43, but may be formed by machining after forming the cylinder head 43.

However, since the tumble passage 6A is formed in a horizontally long oval cross section in which the transverse cross section 69 is long in the passage width direction as described above, molding at the time of casting is easy and preferable.

As illustrated in Fig. 2, the tumble passage 6A of the cylinder head 43 is formed with a uniform passage sectional height h from the tumble passage head inlet opening 66 to the tumble passage outlet 68.

The orientation of the tumble passage 6A of the cylinder head 43 and the passage sectional height h are set such that the intake air flow f that has passed through the tumble passage 6A of the cylinder head 43 and jetted into the intake port 37 is directed between the umbrella portion 73a of the opened intake valve 73 and an intake valve valve seat 77 as indicated by a two-dot chain line in Fig. 2.

Further, in Fig. 6, the intake valve guide 71 fitted to the curved outer wall portion 37a of the intake port 37 and the shaft portion of the intake valve 73 slidably supported by the intake valve guide 71 are illustrated at the back of the main passage head inlet opening 67.

As described above, since the transverse cross section 69 of the tumble passage 6A formed by the partition wall 65 in the intake passage 6 is formed in the oblong oval cross section long in the passage width direction, the intake air flow during the low-load operation of the internal combustion engine 4 is rectified along the tumble passage 6A, the collision interference of the intake valve seat of the intake valve port 35 with the intake air flow is reduced, the intake air flow flows into the combustion chamber 32, and the tumble flow T is strengthened. Therefore, atomization of the air-fuel mixture by the tumble flow T during the low-load operation is promoted, rapid combustion and lean combustion are possible, and fuel consumption performance can be improved.

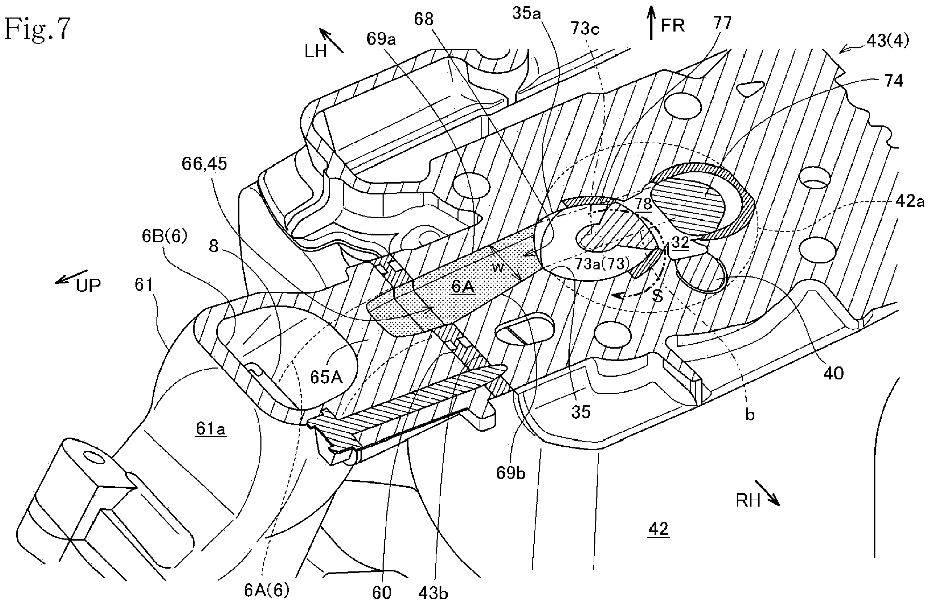

Fig. 7 is a perspective view of a cross section, viewed from the head cover 44 side, which slightly obliquely intersects with the cylinder axis C rather than being orthogonal to the cylinder axis C, generally along the tumble passage 6A of the cylinder head 43 as viewed in a direction of the arrows VII-VII in Fig. 2.

In the cylinder head 43, one end 69a in the longitudinal direction of the transverse cross section 69 of the tumble passage 6A is oriented along the tangential direction of an opening edge 35a of the intake valve port 35, and the other end 69b is oriented to gradually narrow the longitudinal width w of the transverse cross section 69 toward the intake valve port 35.

Therefore, according to the present embodiment, the intake air flow flowing through the tumble passage 6A can linearly flow into the combustion chamber 32 through the intake valve port 35, and the longitudinal width w of the transverse cross section 69 of the tumble passage 6A gradually decreases, so that the passage cross-sectional area gradually decreases and the flow velocity gradually increases. Therefore, the tumble flow T is strengthened in the combustion chamber 32, atomization of the air-fuel mixture is further promoted, leaner combustion is possible, and fuel consumption performance can be improved.

As illustrated in Fig. 2, the internal combustion engine 4 is provided with a pair of the intake valve 73 and the exhaust valve 74 above the combustion chamber 32, and the shaft portion 73c and a shaft portion 74c of the intake valves and the exhaust valves are opened and oriented in a V shape in the front-rear direction.

As illustrated in Fig. 7, in the cylinder head 43, a virtual extension line b in the passage direction of the other end 69b of the tumble passage 6A passes through the vicinity of the shaft portion 73c of the intake valve 73, and the ignition plug 40 is disposed on a peripheral portion of the combustion chamber 32 on the other end 69b side.

Therefore, since the intake air flow flowing out from the other end 69b side of the tumble passage 6A flows so as to be in contact with the shaft portion 73c of the intake valve 73, the intake air flow on the other end 69b side directly flowing in through the port opening 78 between the upper surface of the umbrella portion 73a of the intake valve 73 and the intake valve valve seat 77 of the intake valve port 35 comes into contact with the shaft portion 73c to reduce the flow velocity, and a swirl flow S directed toward the other end 69b side is generated.

Therefore, the tumble flow T is inclined in the direction of the swirl flow S, and the air-fuel mixture is guided to the ignition plug 40 provided on a position on the other end 69b side of the tumble passage 6A.
Therefore, ignitability in the ignition plug 40 is enhanced, combustion stability is obtained, lean combustion is improved, and fuel performance is improved.

The swirl flow S indicated by the two-dot chain line in Fig. 7 schematically illustrates the swirl flow S in the combustion chamber 32 when the piston 33 descends in the cylinder bore 42a as indicated by the two-dot chain line in Fig. 2.

In addition, as illustrated in Fig. 2, in the cylinder head 43, the tumble passage 80A is linearly formed to be directed between the umbrella portion 73a when the intake valve 73 is opened and the intake valve valve seat 77 on the exhaust valve port 36 side of the intake valve port 35 in a side view with respect to the cross section along the cylinder axis C.

Therefore, as indicated by a two-dot chain line in Fig. 2, the intake air flow f flowing out of the tumble passage 6A can pass above the umbrella portion 73a of the intake valve 73 and then directly flow into the cylinder bore 42a by reducing collision interference with the intake valve seat 77, so that the tumble flow T is easily generated in the combustion chamber 32.

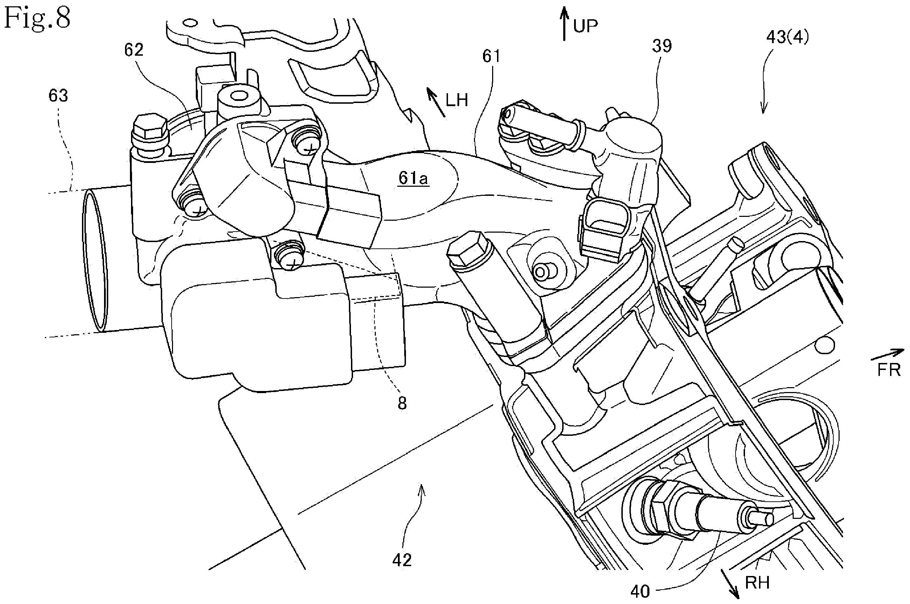

Fig. 8 is a top perspective view of the cylinder head 43 as viewed from the upper right rear portion as viewed from the arrow VIII in Fig. 2, and illustrates that the inlet manifold 61, the reed valve 8, and the throttle body 62 are sequentially attached to the upper surface of the cylinder head 43, and the ignition plug 40 is attached from the right side.

Since the reed valve element 87 of the main passage 6B of the inserted reed valve 8 has a substantially rectangular shape that is wide in the passage width direction and moves up and down, an upper surface 61a of the inlet manifold 61 is formed in a planar manner so as to match the rectangular shape (see also Fig. 2).

Therefore, the upper portion of the inlet manifold 61 becomes compact, and a space for other equipment, piping, and the like is increased.

### [Reference Signs List]

- 1: Motorcycle (Scooter-type motorcycle)
- 2: Vehicle body frame
- 3: Swing-type power unit (Power unit)
- 4: Internal combustion engine
- 5: Power transmission part
- 6: Intake passage
- 6A: Tumble passage
- 6Aa: Upstream end opening
- 6B: Main passage
- 6Ba: Upstream end opening
- 8: Reed valve
- 9: Valve mechanism
- 10: Vehicle body cover
- 30: Crankcase
- 32: Combustion chamber
- 33: Piston
- 33a: Top surface
- 35: Intake valve port
- 35a: Opening edge
- 37: Intake port
- 37a: Curved outer wall portion
- 39: Fuel injection valve
- 40: Ignition plug
- 41: Crankshaft
- 42: Cylinder block
- 42a: Cylinder bore
- 43: Cylinder head
- 43a: Combustion chamber ceiling surface
- 43b: Intake-side flange surface
- 44: Head cover
- 45: Intake port inlet
- 60: Insulator
- 61: Inlet manifold
- 61a: Upper surface
- 62: Throttle body
- 62a: Throttle valve
- 62c: Intake path
- 62d: Downstream opening
- 65: Partition wall
- 65A: Inlet-manifold-side partition wall
- 65Aa: Upstream end
- 65B: Insulator-side partition wall
- 65C: Intake-port-side partition wall
- 66: Tumble passage head inlet opening
- 67: Main passage head inlet opening
- 67a: Fuel injection avoiding recess
- 68: Tumble passage outlet
- 69: Transverse cross section
- 69a: One end (in longitudinal direction of transverse cross section 69 of tumble passage 6A)
- 69b: Other end (in longitudinal direction of transverse cross section 69 of tumble passage 6A)
- 73: Intake valve
- 73a: Umbrella portion
- 73c: Shaft portion
- 74: Exhaust valve
- 74c: Shaft portion
- 77: Intake valve valve seat
- 78: Port opening
- 80: Valve intake path
- 81: Reed valve body
- 81a: Inclined surface
- 82: Inlet opening
- 82W: Inlet opening width
- 83: Downstream end
- 84: Tumble-passage-side outlet opening
- 85: Mounting flange portion
- 86: Main-passage-side outlet opening
- 86W: Main-passage-side outlet opening width
- 87: Reed valve element
- 87a: One end portion
- 87b: Opening-side edge portion
- 87c: Reed valve element screw
- 88: Step portion
- C: cylinder axis
- T: Tumble flow
- S: Swirl flow
- I: Injection center line
- h: Passage sectional height
- f: Intake air flow
- F: Intake flow direction (of intake path 62c)
- X: Center axis (of intake path 62c)
- w: Longitudinal width (of transverse cross section 69 of tumble passage 6A)
- b: Virtual extension line (of other end 69b)

## Claims

1. An internal combustion engine with an intake structure in which a main passage (6B) and a tumble passage (6A) are formed by a partition wall (65) that partitions an intake passage (6) provided between a throttle valve (62a) and an intake valve (73) vertically along the passage direction, and configured to guide intake air into the tumble passage (6A) when the internal combustion engine (4) is in a low-load operation, wherein
a transverse cross section (69) of the tumble passage (6A) formed by the partition wall (65) is formed in a horizontally long oval shape whose longitudinal direction is a passage width direction,
one end (69a) in a longitudinal direction of the transverse cross section (69) of the tumble passage (6A) is oriented along a tangential direction of an opening edge (35a) of an intake valve port (35), and another end (69b) is oriented to gradually narrow a longitudinal width (w) of the transverse cross section (69) toward the intake valve port (35), and
the internal combustion engine (4) includes a pair of an exhaust valve (74) and the intake valve (73) in which shaft portions (74c, 73c) of the exhaust valve (74) and the intake valve (73) are oriented to be opened in a V shape in a front-rear direction above a combustion chamber (32), a virtual extension line (b) of the other end (69b) of the tumble passage (6A) passes through a vicinity of the shaft portion (73c) of the intake valve (73) on a side opposite to the one end (69a) with respect to the shaft portion (73d), and an ignition plug (40) is disposed on a peripheral portion of the combustion chamber (32) on a side of the other end (69b).

2. The internal combustion engine as claimed in claim 1, wherein the main passage (6B) is provided with a reed valve (8) that closes the intake air flow when the internal combustion engine (4) is in the low-load operation.

3. The internal combustion engine as claimed in claim 2, wherein
the reed valve (8) is provided between the throttle valve (62a) and an inlet manifold (61), and
the reed valve element (87) that restricts the intake air flow of the main passage (6B) has one end portion (87a) on an upstream side attached to the reed valve body (81) of the reed valve (8) so as to cover a main-passage-side outlet opening (86) of the reed valve (8), and an opening-side edge portion (87b) on a downstream side formed in a direction parallel to the passage width direction of the tumble passage (6A).

4. The internal combustion engine as claimed in claim 3, wherein the reed valve body (81) of the reed valve (8) is formed by a mold combined from two directions against each other in which the main passage (6B) is molded by a molding die from a downstream side and the tumble passage (6A) is molded by a molding die from an upstream side.

## Patentansprüche

1. Verbrennungsmotor mit einer Einlassstruktur, worin ein Hauptkanal (6B) und ein Wirbelkanal (6A) durch eine Trennwand (65) ausgebildet sind, welche einen zwischen einem Drosselventil (62a) und einem Einlassventil (73) vorgesehenen Einlasskanal (6) entlang der Kanalrichtung vertikal teilt, und konfiguriert ist, um Einlassluft in den Wirbelkanal (6A) einzuleiten, wenn der Verbrennungsmotor (4) in einem Niederlastbetrieb ist, wobei
ein Transversalquerschnitt (69) des durch die Trennwand (65) gebilden Wirbelkanals (6A), in einer horizontal langen ovalen Form gebildet ist, deren Längsrichtung eine Kanalbreitenrichtung ist,
ein Ende (69a) in einer Längsrichtung des Transversalquerschnitts (69) des Wirbelkanals (6A) entlang einer tangentialen Richtung eines Öffnungsrands (35a) einer Einlassventilöffnung (35) orientiert ist, und ein anderes Ende (69b) orientiert ist, um eine Längsbreite (w) des Transversalquerschnitts (69) zu der Einlassventilöffnung (35) hin allmählich zu verengen, und
der Verbrennungsmotor (4) ein Paar eines Auslassventils (74) und des Einlassventils (73) enthält, in dem Schaftabschnitte (74c, 73c) des Auslassventils (74) und des Einlassventils (73) so orientiert sind, dass sie sich in einer V-Form in einer vorne-hinten-Richtung oberhalb einer Brennkammer (32) öffnen, wobei eine virtuelle Verlängerungslinie (b) des anderen Endes (69b) des Wirbelkanals (6A) durch eine Nachbarschaft des Schaftabschnitts (73c) des Einlassventils (73) an einer dem einen Ende (69a) in Bezug auf den Schaftabschnitt (73d) entgegengesetzten Seite verläuft, und eine Zündkerze (40) an einem peripheren Abschnitt der Brennkammer (32) an einer Seite des anderen Endes (69b) angeordnet ist.

2. Der Verbrennungsmotor nach Anspruch 1, wobei der Hauptkanal (6B) mit einem Blattventil (8) versehen ist, das die Einlassluftströmung verschließt, wenn der Verbrennungsmotor (4) im Niederlastbetrieb ist.

3. Der Verbrennungsmotor nach Anspruch 2, wobei
das Blattventil (8) zwischen dem Drosselventil (62a) und einem Einlasskrümmer (61) vorgesehen ist, und
das Blattventilelement (87), das die Einlassluftströmung des Hauptkanals (6B) begrenzt, einen Endabschnitt (87a) an einer stromaufwärtigen Seite, der an dem Blattventilkörper (81) des Blattventils (8) angebracht ist, um eine hauptkanalseitige Auslassöffnung (86) des Blattventils (8) abzudecken, und einen öffnungsseitigen Randabschnitt (87b) an einer stromabwärtigen Seite, der in einer Richtung parallel zu der Kanalbreitenrichtung des Wirbelkanals (6A) ausgebildet ist, aufweist.

4. Der Verbrennungsmotor nach Anspruch 3, wobei der Blattventilkörper (81) des Blattventils (8) durch eine Form gebildet wird, die aus zwei Richtungen gegeneinander kombiniert ist, in der der Hauptkanal (6B) durch ein Formwerkzeug von einer stromabwärtigen Seite her geformt wird und der Wirbelkanal (6A) durch ein Formwerkzeug von einer stromaufwärtigen Seite her geformt wird.

## Revendications

1. Moteur à combustion interne doté d'une structure d'admission dans laquelle un passage principal (6B) et un passage de culbutage (6A) sont formés par une cloison (65) qui cloisonne un passage d'admission (6) prévu entre un papillon des gaz (62a) et une soupape d'admission (73) verticalement le long de la direction de passage, et configuré pour guider l'air d'admission dans le passage de culbutage (6A) lorsque le moteur à combustion interne (4) est en fonctionnement à faible charge, dans lequel
une section transversale (69) du passage de culbutage (6A) formé par la cloison (65) est formée en ovale horizontalement long dont la direction longitudinale est une direction de largeur de passage,
une extrémité (69a) dans une direction longitudinale de la section transversale (69) du passage de culbutage (6A) est orientée le long d'une direction tangentielle d'un bord d'ouverture (35a) d'une lumière de soupape d'admission (35), et une autre extrémité (69b) est orientée pour rétrécir progressivement une largeur longitudinale (w) de la section transversale (69) vers la lumière de soupape d'admission (35), et
le moteur à combustion interne (4) comporte une paire d'une soupape d'échappement (74) et de la soupape d'admission (73) dans laquelle les portions d'arbre (74c, 73c) de la soupape d'échappement (74) et de la soupape d'admission (73) sont orientées de manière à s'ouvrir en forme de V dans une direction avant-arrière au-dessus d'une chambre de combustion (32), une ligne d'extension virtuelle (b) de l'autre extrémité (69b) du passage de culbutage (6A) passe par un voisinage de la portion d'arbre (73c) de la soupape d'admission (73) sur un côté opposé à l'une des extrémités (69a) par rapport à la portion d'arbre (73d), et un bouchon d'allumage (40) est disposé sur une portion périphérique de la chambre de combustion (32) sur un côté de l'autre extrémité (69b).

2. Moteur à combustion interne selon la revendication 1, dans lequel le passage principal (6B) est pourvu d'une soupape flexible (8) qui ferme le flux d'air d'admission lorsque le moteur à combustion interne (4) est dans le fonctionnement à faible charge.

3. Moteur à combustion interne selon la revendication 2, dans lequel
la soupape flexible (8) est placée entre le papillon des gaz (62a) et un collecteur d'admission (61), et
l'élément de soupape flexible (87) qui restreint le flux d'air d'admission du passage principal (6B) a une portion d'extrémité (87a) d'un côté amont attachée au corps de soupape flexible (81) de la soupape flexible (8) de manière à couvrir une ouverture de sortie côté passage principal (86) de la soupape flexible (8), et une portion de bord côté ouverture (87b) d'un côté aval formée dans une direction parallèle à la direction de largeur de passage du passage de culbutage (6A).

4. Moteur à combustion interne selon la revendication 3, dans lequel le corps de soupape flexible (81) de la soupape flexible (8) est formé par un moule combiné depuis deux directions l'une contre l'autre dans lesquelles le passage principal (6B) est moulé par une matrice de moulage depuis un côté aval et le passage de culbutage (6A) est moulé par une matrice de moulage depuis un côté amont.
